(19) **Europäisches Patentamt / European Patent Office / Office européen des brevets**

(11) **EP 4 264 390 B1**

(12) **FASCICULE DE BREVET EUROPEEN**

(45) Date de publication et mention de la délivrance du brevet:
**03.09.2025 Bulletin 2025/36**

(21) Numéro de dépôt: **21839510.1**

(22) Date de dépôt: **16.12.2021**

(51) Classification Internationale des Brevets (IPC):
**G05D 1/00** (2024.01) **B60W 50/00** (2006.01)
**B62D 15/02** (2006.01) **B60W 30/09** (2012.01)

(52) Classification Coopérative des Brevets (CPC):
**B60W 30/09; B62D 15/0265;** B60W 2050/0013;
B60W 2520/10; B60W 2520/20; B60W 2540/18;
B60W 2710/207; B60W 2720/10; B60W 2720/14

(86) Numéro de dépôt international:
**PCT/EP2021/086291**

(87) Numéro de publication internationale:
**WO 2022/129398 (23.06.2022 Gazette 2022/25)**

(54) **PROCÉDÉ DE COMMANDE D'UN VÉHICULE AUTOMOBILE POUR L'ÉVITEMENT D'UNE CIBLE AVEC RAFFINEMENT DE TRAJECTOIRE CLOTHOÏDE**

VERFAHREN ZUR STEUERUNG EINES KRAFTFAHRZEUGS ZUM AUSWEICHEN EINES ZIELOBJEKTS MIT VERFEINERUNG EINER KLOTHOIDEN BAHN

METHOD FOR CONTROLLING A MOTOR VEHICLE FOR TARGET AVOIDANCE WITH CLOTHOID TRAJECTORY REFINEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2020 FR 2013448**

(43) Date de publication de la demande:
**25.10.2023 Bulletin 2023/43**

(73) Titulaires:
• **Ampere SAS**
**92100 Boulogne-Billancourt (FR)**
• **NISSAN MOTOR CO., LTD.**
**Kanagawa 221-0023 (JP)**

(72) Inventeurs:
• **BRUNO, Geoffrey**
**92130 Issy les Moulineaux (FR)**
• **DO, Anh-Lam**
**92160 ANTONY (FR)**
• **NGUYEN, Khoa Duc**
**78500 Sartrouville (FR)**
• **SANCHEZ-PEREZ, Juan-Pablo**
**95110 Sannois (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**FR-A1- 3 096 947**

• **SCHWARTING WILKO ET AL: "Parallel autonomy in automated vehicles: Safe motion generation with minimal intervention", 2017 IEEE INTERNATIONAL CONFERENCE ON ROBOTICS AND AUTOMATION (ICRA), IEEE, 29 May 2017 (2017-05-29), pages 1928 - 1935, XP033127013, DOI: 10.1109/ICRA.2017.7989224**
• **ANDREW GRAY ET AL: "Predictive control for agile semi-autonomous ground vehicles using motion primitives", AMERICAN CONTROL CONFERENCE (ACC), 2012, IEEE, 27 June 2012 (2012-06-27), pages 4239 - 4244, XP032244737, ISBN: 978-1-4577-1095-7, DOI: 10.1109/ACC.2012.6315303**

## Description

### Domaine technique

L'invention a pour domaine technique les systèmes de contrôle de trajectoire, et plus particulièrement de tels systèmes basés sur des trajectoires sous forme de clothoïdes.

### Etat de la technique antérieure

Certains systèmes de commande de la trajectoire d'un véhicule automobile génèrent des trajectoires clothoïdes de référence pour un système automatique d'évitement AES (acronyme anglophone pour « Automatic Evasive Steering ») afin d'éviter une collision avec des obstacles détectés sur la route toujours en assurant un bon ressenti du conducteur au volant.

Ces trajectoires de référence sous forme de clothoïde prennent en compte la contrôlabilité du système (e.g. limite de la magnitude/gradient de l'angle du volant) et de certains critères de confort (e.g. jerk, continuité de courbure, ...). Cependant, malgré toutes ses performances, cette approche robuste de la planification de trajectoire manque de flexibilité car elle impose des contraintes strictes aux trajectoires cherchées (c.à.d. l'angle final du volant est égal à 0, l'intégrale du profil d'angle de volant est égale à 0) et parce que les conditions initiales non nulles du système sont négligées. Cela risque de rendre le contrôleur de suivi de trajectoire et le système véhicule instables. Par exemple, dans le cas où la valeur absolue du cap du véhicule lors de l'activation de l'AES est suffisamment grande, le contrôleur force le cap à zéro pour éviter d'être dévié de la trajectoire clothoïde de référence. Par conséquent, le volant tournera contre le sens naturel d'évitement, situation qui s'avère inconfortable et incompréhensible aux yeux du conducteur. En outre, si le conducteur agit contre cette manœuvre, en tournant le volant dans le sens logique d'évitement, et le système applique des contraintes de saturations, alors ce dernier devient instable et oscillant via le phénomène d'oscillation induite par le pilote (« pilote induced oscillation » en anglais).

Il existe donc un besoin de correction du problème décrit ci-dessus.

De l'état de la technique antérieure, on connait les documents suivants.

La demande de brevet français FR2003457 décrit une méthode très restreinte imposant des contraintes rigoureuses aux trajectoires planifiées (e.g. l'angle final du volant est égal à 0, l'intégrale du profil d'angle de volant est égale à 0 etc.). Si les conditions initiales sont non nulles, on trouve des comportements potentiellement déstabilisants pour le conducteur Par exemple, lorsqu'il y a un cap initial positif et assez important, le volant est tourné dans le mauvais sens au début de la phase d'évitement. Cette instabilité pouvant être amplifiée si le conducteur intervient sur le volant dans la phase d'évitement.

Le document « Clothoid-based model predictive control for autonomous driving, P. Lima, J.Martensson and M. Trincavelli, ECC, Linz (2015) » divulgue une méthode de commande pour le centrage dans la voie. De plus, cette méthode ne prend pas en compte différentes contraintes indispensables à la stabilité du système, telle que la contrôlabilité. En outre, cette méthode peut provoquer des discontinuités dans la trajectoire calculée.

Le document US 2008/0255728 décrit la construction de courbes clothoïdes à partir d'un état initial et final connu, à travers une géométrie de triangles isocèles contenant une combinaison de formes clothoïdes. L'objectif de ce document est de trouver une façon simple de naviguer d'un point à un autre, pour être appliqué à un problème d'orientation plutôt que de minimiser le temps avant collision TTC sous des contraintes dynamiques. De plus, cette application ne tient pas compte de limites dynamiques et il n'y a aucune démarche d'optimisation du temps de manœuvre pour une situation donnée.

Le document "Parallel autonomy in automated vehicles: Safe motion generation with minimal intervention, Wilko Schwarting, Javier Alonso-Mora, Liam Pauli, Sertac Karaman et Daniela Rus (ICRA 2017)" optimise les trajectoires d'évitement de type clothoïdes.

### Exposé de l'invention

L'invention a pour objet un procédé de commande d'un véhicule automobile pour l'évitement d'une cible, le véhicule automobile étant muni d'au moins deux capteurs de perception, le procédé de commande comprenant les étapes suivantes :

- une étape de détermination des données des au moins deux capteurs,
- une étape de fusion des données des au moins deux capteurs de sorte à déterminer au moins l'angle du volant, la vitesse du véhicule et le cap du véhicule,
- une étape de planification d'une trajectoire d'évitement de la cible sous la forme d'une clothoïde, comme trajectoire de référence,
- une étape de raffinement de la trajectoire d'évitement de la cible fonction de l'angle du volant, de la vitesse du véhicule et du cap du véhicule et basée sur la résolution d'un problème d'optimisation,
- une étape de commande du véhicule de sorte à réaliser la trajectoire raffinée,

l'étape de raffinement de la trajectoire comprenant une première série de sous-étapes pour affiner la trajectoire d'évitement en fonction de la longueur de la trajectoire, du sens de rotation du volant et du cap final et une deuxième série de sous-étapes pour raffiner la trajectoire affinée en fonction du cap initial et du sens de rotation du volant.

Le problème d'optimisation peut être fonction d'un déplacement longitudinal de référence, d'un déplacement latéral de référence, d'un cap du véhicule de référence, d'une courbure de la trajectoire du véhicule de référence et d'un vecteur de décision comprenant la vitesse de variation de la courbure de la trajectoire et la distance parcourue par rapport à l'origine et de paramètres de réglages déterminés empiriquement, et de contraintes sur le déplacement longitudinal initial, sur le déplacement latéral initial, sur le déplacement latéral final, sur l'angle du volant, sur la vitesse de rotation du volant et sur la valeur du cap final. Ce raffinement permet ainsi de bien prendre en compte la contrôlabilité imposée au système en considérant les contraintes sur l'angle du volant, vitesse de rotation du volant dans l'optimisation de trajectoire. Cette prise en compte permet de trouver une trajectoire, et d'une manière indirecte, un profil de l'angle de volant, plus raisonnable et acceptable pour le conducteur.

Selon l'invention, la première série de sous-étapes comprend les sous-étapes suivantes : on détermine des paramètres d'initialisation du problème d'optimisation en fonction de la trajectoire de référence et des données de la fusion, les paramètres d'initialisation comprenant un déplacement longitudinal de référence, un déplacement latéral de référence, un cap du véhicule de référence, une courbure de la trajectoire du véhicule de référence, un cap initial du véhicule, et un angle initial du volant, on résout le problème d'optimisation et on détermine si une solution optimale existe en déterminant si la solution du problème d'optimisation correspond à un minimum d'une fonction de coût prédéfinie et si la solution du problème d'optimisation satisfait une contrainte sur le cap final du véhicule, si tel est le cas, on détermine le profil d'angle du volant depuis l'instant d'activation du procédé de commande puis on détermine si le signe de l'angle du volant associé au premier extremum du profil d'angle du volant présente le même signe que le signe de l'angle du volant de la trajectoire de référence et s'il existe au plus un extremum de signe opposé au premier extremum sur la durée de la trajectoire optimisée, si tel est le cas, la solution du problème d'optimisation est considérée comme une trajectoire affinée.

Si on détermine qu'une solution optimale n'existe pas, on peut réaliser les étapes suivantes : on prolonge la trajectoire d'une durée prédéterminée, puis on reprend le procédé à la résolution du problème d'optimisation en tenant compte de la prolongation de trajectoire, la durée prédéterminée étant augmentée à chaque occurrence successive de détermination qu'une solution optimale n'existe pas.

Si le profil d'angle du volant n'est pas satisfaisant, on peut réaliser les étapes suivantes : on applique un décalage longitudinal à la trajectoire de référence, et on résout de nouveau le problème d'optimisation, puis on reprend le procédé à la détermination du profil d'angle du volant, le décalage longitudinal étant augmenté à chaque occurrence successive de détermination que le profil d'angle du volant n'est pas satisfaisant.

Une contrainte du problème d'optimisation peut être que le déplacement longitudinal des points de la trajectoire recherchée doit être égal au déplacement longitudinal des points dans la trajectoire de référence, afin d'assurer le lissage de la trajectoire affinée.

Une contrainte du problème d'optimisation peut être que la valeur finale du cap du véhicule de la trajectoire affinée doit être comprise dans un intervalle restreint de valeurs, afin de stabiliser la trajectoire du véhicule après l'évitement.

Une contrainte du problème d'optimisation peut être que le déplacement longitudinal des points de la trajectoire affinée doit être inférieur au déplacement latéral de la ligne extrême à ne pas dépasser lors d'une correction.

Une contrainte du problème d'optimisation peut être que la valeur finale du déplacement latéral de la trajectoire affinée doit être supérieure ou égale à la valeur finale du déplacement latéral ciblé par la trajectoire de référence.

La deuxième série de sous-étapes peut comprendre les sous-étapes suivantes : on détermine de nouveaux paramètres d'initialisation fonction de la trajectoire affinée et des données de fusion, on applique un décalage latéral prédéterminé à la trajectoire affinée et on résout le problème d'optimisation, on détermine si une solution optimale existe en déterminant si elle correspond à un minimum d'une fonction de coût prédéfinie, si tel est le cas, on détermine le profil d'angle du volant depuis l'instant du procédé de commande et on détermine si le signe de l'angle du volant associé au premier extremum du profil d'angle du volant présente le même signe que le signe de l'angle du volant de la trajectoire de référence et s'il existe au plus un extremum de signe opposé au premier extremum sur la durée de la trajectoire optimisée, si tel est le cas, la solution du problème d'optimisation est considérée comme une trajectoire raffinée finale. Ainsi les contraintes sur l'angle de volant et sur la position latérale combinées avec le décalage sur la position latérale initiale garantissent de trouver la trajectoire optimale qui ne demande pas de braquer le volant dans le mauvais sens, au début de la manœuvre d'évitement, ce qui permet d'améliorer la confiance du conducteur et la stabilité du véhicule.

Si on détermine qu'une solution optimale n'existe pas, on peut réaliser les étapes suivantes : on réduit le cap initial d'un écart angulaire prédéterminé puis on reprend le procédé à la résolution du problème d'optimisation, l'écart angulaire étant augmenté à chaque occurrence successive dès qu'une solution optimale n'existe pas.

Si on détermine que la solution optimale ne satisfait pas aux contraintes d'angle du volant, on peut réaliser les étapes suivantes : on applique un décalage longitudinal à la trajectoire affinée, on résout le problème d'optimisation, puis on reprend le procédé à la détermination du profil d'angle du volant, le décalage longitudinal étant augmenté à chaque occurrence successive de détermination que le profil d'angle du volant n'est pas satisfaisant.

La durée prédéterminée, l'écart angulaire, et le décalage longitudinal peuvent être incrémentés successivement à concurrence de valeurs limites prédéterminées. Si tel est le cas, l'étape de raffinement s'interrompt et la trajectoire de référence est réalisée lors de l'étape de commande du véhicule.

L'invention a également pour objet un système de commande d'un véhicule automobile pour l'évitement d'une cible, le véhicule automobile étant muni d'au moins un capteur de perception, et d'au moins un moyen de calcul configuré pour réaliser le procédé de commande tel que défini ci-dessus.

*Brève description des dessins*

D'autres buts, caractéristiques et avantages de l'invention apparaîtront à la lecture de la description suivante, donnée uniquement à titre d'exemple non limitatif et faite en référence aux dessins annexés sur lesquels :

- [Fig 1] illustre les principales étapes du procédé de commande de la présente invention, et
- [Fig 2] illustre les principales sous-étapes du raffinement de trajectoire selon la présente invention.

## *Description détaillée*

Le système de commande décrit ci-après a pour but de corriger les problèmes de l'état de l'art en affinant les clothoïdes générées par planification de trajectoire de telle manière que le comportement du système lors d'un évitement soit compréhensible et acceptable par le conducteur. Ces trajectoires de référence sont reconstruites en prenant en compte les conditions initiales du véhicule. Gardant la forme clothoïde, elles sont toujours soumises aux contraintes de contrôlabilité.

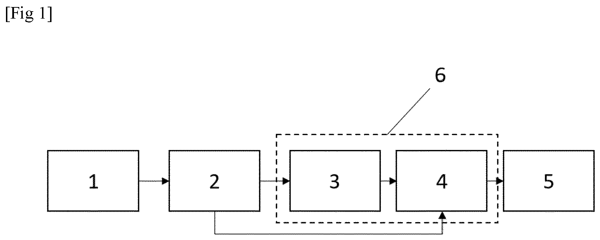

La figure 1 illustre l'interfaçage du procédé de commande de la présente invention avec l'état de la technique antérieure.

Un véhicule automobile est muni d'au moins un capteur et d'un moyen de fusion configuré pour fusionner les données déterminées par les capteurs et connecté en entrée d'au moins un moyen de calcul configuré pour exécuter les étapes du procédé de commande suivant.

Le procédé de commande selon l'invention comprend une étape d'acquisition de données 1, une étape de fusion 2 des données acquises, une étape de détermination 3 d'une trajectoire d'évitement d'une cible, une étape de calcul 4 d'une trajectoire raffinée et une étape de commande 5 du mouvement du véhicule (« Motion Control » en langue anglaise). L'étape de détermination 3 d'une trajectoire d'évitement d'une cible et l'étape de calcul 4 d'une trajectoire raffinée sont comprises dans un procédé automatique d'évitement 6 de type AES.

L'étape de calcul 4 permet de raffiner la trajectoire obtenue de l'étape de détermination 3 d'une trajectoire d'évitement d'une cible qui constitue une planification de trajectoire (« Path Planning » en langue anglaise) classique.

Le raffinement de trajectoire (« Path Refining » en langue anglaise) permet d'affiner les trajectoires générées par la planification de trajectoire classique en fonction de données reçues de la fusion de données, notamment le cap, l'angle du volant et la vitesse du véhicule au moment d'activation du procédé.

Le principe de raffinement de trajectoire est avant tout de trouver une approximation/modèle linéaire permettant de décrire une clothoïde de manière simple. On viendra ensuite utiliser cette approximation/modèle pour reformuler le problème de « trajectoire affinée » en un problème d'optimisation quadratique.

On va maintenant décrire le modèle linéaire d'une clothoïde

Les équations suivantes définissent une trajectoire sous forme clothoïde.

[Math 1]

$$x(s_2) = x(s_1) + \int_{s_1}^{s_2} \cos\big(\theta(s)\big) ds$$

[Math 2]

$$y(s_2) = y(s_2) + \int_{s_1}^{s_2} \sin(\theta(s)) ds$$

Pour deux points successifs i et i+1, se situant sur une même clothoïde et si, $s_{i+1}$ leur distance parcourue depuis l'origine, leurs équations peuvent être approchées comme suit :

[Math 3]

$$x(s_{i+1}) \approx f_{x_i} = x(s_i) + (s_{i+1} - s_i) * \cos(\theta(s_{i+1}))$$
$$= x(s_i) + s_i * \cos\left(\theta(s_i) + c_i * \frac{s_i^2}{2} + \kappa(s_i) * s_i\right)$$

[Math 4]

$$y(s_{i+1}) \approx f_{y_i} = y(s_i) + (s_{i+1} - s_i) * \sin(\theta(s_{i+1}))$$
$$= y(s_i) + S_i * \sin\left(\theta(s_i) + c_i * \frac{s_i^2}{2} + \kappa(s_i) * S_i\right)$$

[Math 5]

$$\theta(s_{i+1}) = f_{\theta_i} = \theta(s_i) + c_i * \frac{s_i^2}{2} + \kappa(s_i) * s_i$$

[Math 6]

$$\kappa(s_{i+1}) = f_{\kappa_i} = \kappa(s_i) + c_i * s_i$$

Avec

si :Distance parcourue de l'origine au point i sur la trajectoire
$x(s_i)$ :Déplacement longitudinal du véhicule au point i sur la trajectoire par rapport à l'origine
$y(s_i)$ :Déplacement latéral du véhicule au point i sur la trajectoire par rapport à l'origine
$\theta(s_i)$ :Cap du véhicule au point i sur la trajectoire
$\kappa(s_i)$ : Courbure de la trajectoire du véhicule au point i
$c_i$ :Vitesse de variation de la courbure de la trajectoire au point i

Les équations ([Math 3] - [Math 6]) ci-dessus sont utilisées comme notre modèle décrivant la trajectoire souhaitée du véhicule. Si on définit $X_i = (x_i, y_i, \theta_i, \kappa_i)$; $U_i = (c_i, s_i)$, ces équations peuvent être réexprimées simplement comme :

[Math 7]

$$X_{i+1} = f(X_i, U_i) = \begin{bmatrix} f_{x_i} \\ f_{y_i} \\ f_{\theta_i} \\ f_{\kappa_i} \end{bmatrix}$$

La linéarisation autour des points de référence de ce modèle est exprimée par :

[Math 8]

$$\tilde{X}_{i+1} = A_i\tilde{X}_i + B_i\tilde{U}_i$$

Avec

$$\tilde{X}_i = X_i - X_{ref\_i} \text{ où } X_{ref\_i} = \left(x_{ref\_i}, y_{ref\_i}, \theta_{ref\_i}, \kappa_{ref\_i}\right)$$

$$\tilde{U}_i = U_i - U_{ref_i} \text{ où } U_{ref\_i} = (c_{ref\_i}, S_{ref\_i})$$

Les matrices de coefficients A$_i$ et B$_i$ sont définies par les équations suivantes.

[Math 9]

$$A_i = \frac{\partial f(X_i, U_i)}{\partial X_i}\bigg|_{\substack{X_i=X_{ref_i} \\ U_i=U_{ref_i}}} = \begin{bmatrix} \frac{\partial f_{x_i}}{\partial x_i} & \frac{\partial f_{x_i}}{\partial y_i} & \frac{\partial f_{x_i}}{\partial \theta_i} & \frac{\partial f_{x_i}}{\partial \kappa_i} \\ \frac{\partial f_{y_i}}{\partial x_i} & \frac{\partial f_{y_i}}{\partial y_i} & \frac{\partial f_{y_i}}{\partial \theta_i} & \frac{\partial f_{y_i}}{\partial \kappa_i} \\ \frac{\partial f_{\theta_i}}{\partial x_i} & \frac{\partial f_{\theta_i}}{\partial y_i} & \frac{\partial f_{\theta_i}}{\partial \theta_i} & \frac{\partial f_{\theta_i}}{\partial \kappa_i} \\ \frac{\partial f_{\kappa_i}}{\partial x_i} & \frac{\partial f_{\kappa_i}}{\partial y_i} & \frac{\partial f_{\kappa_i}}{\partial \theta_i} & \frac{\partial f_{\kappa_i}}{\partial \kappa_i} \end{bmatrix}_{\substack{X_i=X_{ref_i} \\ U_i=U_{ref_i}}}$$

$$= \begin{bmatrix} 1 & 0 & S_{ref\_i}.\sin\left(\theta_{ref\_i} + \kappa_{ref_i}.S_{ref\_i} + c_{ref\_i}.\frac{S_{ref\_i}^2}{2}\right) & -\frac{S_{ref\_i}^2}{2}.\sin\left(\theta_{ref\_i} + \kappa_{ref_i}.S_{ref\_i} + c_{ref\_i}.\frac{S_{ref\_i}^2}{2}\right) \\ 0 & 1 & S_{ref\_i}.\cos\left(\theta_{ref\_i} + \kappa_{ref_i}.S_{ref\_i} + c_{ref\_i}.\frac{S_{ref\_i}^2}{2}\right) & -\frac{S_{ref\_i}^2}{2}.\cos\left(\theta_{ref\_i} + \kappa_{ref_i}.S_{ref\_i} + c_{ref\_i}.\frac{S_{ref\_i}^2}{2}\right) \\ 0 & 0 & 1 & S_{ref\_i} \\ 0 & 0 & 0 & 0 \end{bmatrix}$$

[Math 10]

$$B_i = \frac{\partial f(X_i, U_i)}{\partial U_i}\bigg|_{\substack{X_i=X_{ref\_i} \\ U_i=U_{ref\_i}}} = \begin{bmatrix} \frac{\partial f_{x_i}}{\partial c_i} & \frac{\partial f_{x_i}}{\partial S_i} \\ \frac{\partial f_{y_i}}{\partial c_i} & \frac{\partial f_{y_i}}{\partial S_i} \\ \frac{\partial f_{\theta_i}}{\partial c_i} & \frac{\partial f_{\theta_i}}{\partial S_i} \\ \frac{\partial f_{\kappa_i}}{\partial c_i} & \frac{\partial f_{\kappa_i}}{\partial S_i} \end{bmatrix}_{\substack{X_i=X_{ref_i} \\ U_i=U_{ref_i}}}$$

$$= \begin{bmatrix} -\frac{S_{ref\_i}^3}{2}.\sin\left(\theta_{ref\_i} + \kappa_{ref_i}.S_{ref\_i} + c_{ref\_i}.\frac{S_{ref\_i}^2}{2}\right) & \cos\left(\theta_{ref\_i} + \kappa_{ref_i}.S_{ref\_i} + c_{ref\_i}.\frac{S_{ref\_i}^2}{2}\right) - S_{ref\_i}.\sin\left(\theta_{ref\_i} + \kappa_{ref_i}.S_{ref\_i} + c_{ref\_i}.\frac{S_{ref\_i}^2}{2}\right) * (\kappa_{ref\_i} + c_{ref\_i}.S_{ref\_i}) \\ -\frac{S_{ref\_i}^3}{2}.\cos\left(\theta_{ref\_i} + \kappa_{ref_i}.S_{ref\_i} + c_{ref\_i}.\frac{S_{ref\_i}^2}{2}\right) & \sin\left(\theta_{ref\_i} + \kappa_{ref_i}.S_{ref\_i} + c_{ref\_i}.\frac{S_{ref\_i}^2}{2}\right) - S_{ref\_i}.\cos\left(\theta_{ref\_i} + \kappa_{ref_i}.S_{ref\_i} + c_{ref\_i}.\frac{S_{ref\_i}^2}{2}\right) * (\kappa_{ref\_i} + c_{ref\_i}.S_{ref\_i}) \\ \frac{S_{ref\_i}^2}{2} & \kappa_{ref\_i} + c_{ref\_i}.S_{ref\_i} \\ S_{ref\_i} & c_{ref\_i} \end{bmatrix}$$

On échantillonne la trajectoire de référence de manière à obtenir un ensemble de N points de référence. Pour l'ensemble de N points de référence sur une trajectoire donnée, on a l'équation suivante :

[Math 11]

$$\tilde{X}_N = A_N\tilde{X}_1 + B_N\tilde{U}_N$$

Avec :

[Math 12]

$$A_N = \begin{bmatrix} A_1 \\ A_2 A_1 \\ \vdots \\ A_{N-2} A_{N-3} \dots A_2 A_1 \\ A_{N-1} A_{N-2} \dots A_2 A_1 \end{bmatrix}$$

[Math 13]

$$B_N = \begin{bmatrix} B_1 & 0 & \dots & 0 \\ A_2 B_1 & B_2 & \dots & 0 \\ \vdots & \vdots & \ddots & \vdots \\ A_{N-2} A_{N-3} \dots A_2 B_1 & A_{N-3} A_{N-4} \dots A_3 B_2 & \ddots & 0 \\ A_{N-1} A_{N-2} \dots A_2 B_1 & A_{N-2} A_{N-3} \dots A_3 B_2 & \dots & B_{N-1} \end{bmatrix}$$

[Math 14]

$$\widetilde{X}_N = \begin{bmatrix} \tilde{X}_2 \\ \tilde{X}_3 \\ \vdots \\ \tilde{X}_N \end{bmatrix} \text{ et } \widetilde{U}_N = \begin{bmatrix} \tilde{U}_1 \\ \tilde{U}_2 \\ \vdots \\ \tilde{U}_{N-1} \end{bmatrix}$$

Dans le but de trouver une trajectoire qui est proche à la trajectoire de référence, sans perte de la forme clothoïde, et soumise aux contraintes de contrôlabilité, on reformule notre problème de recherche en celui d'un calcul d'optimisation, où la fonction de coût est :

[Math 15]

$$J = \widetilde{X}_N^{\ T} \overline{Q} \, \widetilde{X}_N + \widetilde{U}_N^{\ T} \overline{R} \, \widetilde{U}_N$$

La fonction de coût J est soumise à la condition suivante :

[Math 16]

$$\widetilde{U}_N \in U$$

U est l'ensemble de définition de la variable de décision $\tilde{U}_N$. Cet ensemble est déterminé en se basant sur la contrainte concernant la contrôlabilité du système, qui sera détaillée dans les équations ([Math 25] - [Math 26]).

Dans la fonction de coût, $\overline{Q}$ et $\overline{R}$ sont des coefficients de pondération où $\overline{Q} = diag(\underbrace{Q, \dots, Q}_{N \ matrices \ Q})$ et

$$\overline{R} = diag(\underbrace{R, \dots, R}_{N \ matrices \ R})$$

Les matrices Q, R sont des matrices diagonales de taille 4x4.

La fonction de coût ([Math 15]) pourra être développée sous forme d'un problème d'optimisation quadratique avec contrainte ([Math 16]) où l'on cherche à minimiser J :

[Math 17]

$$J = \frac{1}{2} \widetilde{U}_N^{\ T} \overline{H} \, \widetilde{U}_N + \overline{F}^T \, \widetilde{U}_N + d$$

Où

[Math 18]

$$\overline{H} = 2\left(B_N{}^T \overline{Q} B_N + \overline{R}\right)$$

[Math 19]

$$\overline{F} = 2 B_N \overline{Q} A_N \tilde{X}_1$$

[Math 20]

$$d = \tilde{X}_1 A_N{}^T \overline{Q} A_N \tilde{X}_1$$

Sans perte de généralité, on peut supprimer le terme « $d$ » dans l'équation ([Math 17]).

On formule ici le problème de recherche de trajectoire raffinée (proche de la trajectoire de référence définie par le document de la demande de brevet français FR2003457 en date du 07 Avril 2020.) de façon similaire à un problème d'optimisation quadratique classique.

Par contre, les contraintes de contrôlabilité et la limite de la trajectoire raffinée (en terme du dépassement maximal, du cap final etc.) seront abordées plus loin dans la description.

En résolvant les équations [Math 17] à [Math 20], on obtiendra une trajectoire qui est proche de celle de référence, possédant une forme clothoïde, qui satisfait les contraintes de contrôlabilité. Cependant, cela ne garantit pas l'assurance de trouver une trajectoire qui répond complètement à la prestation du système et la sensation de conduite du point de vue du conducteur. Dans cette partie, les contraintes sur les états du système (comme la valeur maximale de l'écart latéral et le cap final) sont prises en compte dans l'optimisation de trajectoire de référence raffinée pour éviter le problème de braquage dans le mauvais sens à l'activation de la fonction AES. Par conséquent, dans ce qui suit, certaines contraintes sont ajoutées au problème d'optimisation.

Une première contrainte est une contrainte d'égalité qui concerne l'abscisse x (déplacement longitudinal du véhicule) des points de la trajectoire recherchée dont la valeur doit être identique à celle des points dans la trajectoire de référence :

[Math 21]

$$x_i = x_{ref\_i} \ \forall \, i = 1, \dots, N$$

Cette contrainte d'égalité permet d'assurer le lissage, c'est-à-dire la continuité de la trajectoire trouvée.

Les contraintes suivantes sont des contraintes d'inégalité. Ainsi, une deuxième contrainte concerne le dépassement maximal de la trajectoire affinée, ainsi le déplacement latéral des points de la trajectoire affinée doit être inférieur au déplacement latéral $Y_{max}$ de la ligne extrême à ne pas dépasser lors d'une correction :

[Math 22]

$$y_i \leq Y_{max} \ \forall \, i = 1, \dots, N$$

La valeur finale du déplacement latéral de la trajectoire affinée doit toutefois être supérieure ou égale à la valeur finale du déplacement latéral ciblé par la trajectoire de référence :

[Math 23]

$$y_N \geq y_{ref\_N}$$

Une troisième contrainte concerne l'angle du volant correspondant à la trajectoire cherchée qui doit être borné en gradient et en magnitude de manière que les contraintes de contrôlabilité soient satisfaites tout au long de la trajectoire. Sachant qu'un lien exact entre l'angle du volant et la variable de décision n'est pas disponible, une approximation se basant sur le modèle bicyclette est utilisée.

On obtient alors une relation entre l'angle du volant et la courbure :

[Math 24]

$$\delta_i = Ratio\_DAE * \left[(l_f + l_r) + \left(\frac{l_r}{C_f} + \frac{l_f}{C_r}\right) * \frac{m}{l_f + l_r} * v^2\right] * \kappa_i \quad \forall i = 1, \dots, N$$

On obtient aussi une relation entre la vitesse de rotation du volant et la courbure :

[Math 25]

$$\dot{\delta}_i = Ratio\_DAE * \left[(l_f + l_r) + \left(\frac{l_r}{C_f} + \frac{l_f}{C_r}\right) * \frac{m}{l_f + l_r} * v^2\right] * v * c_i \quad \forall i = 1, \dots, N$$

Avec :

$\delta_i$ : l'angle du volant au point i (dans le plan cartésien)
$\dot{\delta}_i$ : la vitesse de rotation du volant au point i
$l_f$ et $l_r$ : sont respectivement les distances du centre de gravité du véhicule aux essieux avant et arrière
$m$: est la masse du véhicule
$C_f, C_r$ : Rigidités de dérive des roues avant et arrière
$v$ : vitesse du véhicule
$c_i$ : vitesse de courbure du point i
*Ratio_ DAE :* Ratio entre l'angle du volant et celui des roues

Les contraintes sur l'angle du volant et sa vitesse sont exprimées comme suit :

[Math 26]

$$\frac{\delta_{min}}{Ratio_{DAE} * \left[(l_f + l_r) + \left(\frac{l_r}{C_f} + \frac{l_f}{C_r}\right) * \frac{m}{l_f + l_r} * v^2\right]} \leq \kappa_i$$

$$\leq \frac{\delta_{max}}{Ratio_{DAE} * \left[(l_f + l_r) + \left(\frac{l_r}{C_f} + \frac{l_f}{C_r}\right) * \frac{m}{l_f + l_r} * v^2\right]}$$

$$\forall i = 1, \dots, N$$

[Math 27]

$$\frac{\dot{\delta}_{min}}{Ratio_{DAE} * \left[(l_f + l_r) + \left(\frac{l_r}{C_f} + \frac{l_f}{C_r}\right) * \frac{m}{l_f + l_r} * v^2\right] * v} \leq c_i$$

$$\leq \frac{\dot{\delta}_{max}}{Ratio_{DAE} * \left[(l_f + l_r) + \left(\frac{l_r}{C_f} + \frac{l_f}{C_r}\right) * \frac{m}{l_f + l_r} * v^2\right] * v}$$

$$\forall i = 1, \dots, N$$

Avec :
$\delta_{max}, \delta_{min}, \dot{\delta}_{max}$ et $\dot{\delta}_{min}$: les contraintes de contrôlabilité connues
La valeur finale de l'angle du volant doit être dans un intervalle acceptable pour assurer la stabilisation de la trajectoire du véhicule après l'évitement de l'obstacle :

[Math 28]

$$\Delta_{final\_min} \leq \delta_N \leq \Delta_{final\_max}$$

Durant les valeurs de décalage $\bar{x}$ du déplacement longitudinal au début de la correction, l'angle du volant doit être supérieur ou égal à la valeur d'angle au moment d'activation de l'AES. Il est à noter que le moment d'activation de l'AES correspond au moment d'activation du procédé de commande. La même contrainte est appliquée à l'écart latéral du véhicule. Ces contraintes sont ajoutées dans le but d'éviter de diriger le véhicule vers sa trajectoire de référence lors de l'activation de l'AES et que le cap du véhicule est non nul à ce moment-là. A noter que la valeur de déplacement longitudinal x n'est pas déterminée durant le calcul d'optimisation, mais dans la stratégie d'optimisation posée dans l'équation [Math 37] explicitée plus bas :

[Math 29]

$$\delta_i \geq \delta_1 \; \forall \, i = 1, \dots, n$$

[Math 30]

$$y_i \geq y_1 \; \forall \, i = 1, \dots, n$$

Avec : n correspondant au déplacement longitudinal $\bar{x}$

Une quatrième contrainte concerne la stabilisation de la trajectoire du véhicule après l'évitement à travers la valeur finale du cap du véhicule, qui doit se situer dans un intervalle suffisamment faible. L'objectif d'ajouter ce type de contrainte est d'éviter le cas où la solution optimale est introuvable. Ce type de contrainte est souvent nommée « contrainte relaxée » ou « contrainte molle » et son ajout demande une modification sur la fonction de coût ([Math 17]) et du vecteur de décision $\tilde{U}_N$. Ainsi, le document « Soft constraints and exact penalty functions in model predictive control, Eric C. Kerrigan, Jan M. Maciejowski, UKACC, Cambridge (2000) », inclut ce type de contrainte dans la commande. L'ajout de cette contrainte relaxée permet aussi de faire converger le cap du véhicule à la fin de la trajectoire vers une plage de valeurs souhaitées.

L'équation ([Math 17]) est alors réexprimée comme suit :

[Math 31]

$$J = \frac{1}{2} \tilde{U}_N^{\,T} \overline{H} \, \tilde{U}_N + \overline{F}^T \tilde{U}_N + \epsilon^2 \rho$$

$$= \widetilde{U^*}_N^{\,T} \left( \frac{1}{2} \overline{H} + C_{relax\_1}^T \rho C_{relax\_1} \right) \widetilde{U^*}_N + \overline{F}^T C_{relax\_2} \, \widetilde{U^*}_N$$

Avec :

[Math 32]

$$\widetilde{U^*}_N = \begin{bmatrix} \tilde{U}_N \\ \epsilon \end{bmatrix}$$

[Math 33]

$$C_{relax\_1} = \underbrace{\begin{bmatrix} 0 & \cdots & 0 & 1 \end{bmatrix}}_{N \; elements}$$

[Math 34]

$$C_{relax\_2} = \underbrace{\begin{bmatrix} 1 & 0 & \cdots & 0 \\ \vdots & \ddots & \ddots & \vdots \\ 0 & \cdots & 1 & 0 \end{bmatrix}}_{N \; elements} \Big\} (N-1) \; elements$$

ε : variable de relaxation

$\rho$ : le paramètre de pondération pour $\varepsilon$

En plus,

[Math 35]

$$\left(\theta_{min} - \theta_{ref\_N}\right) - V.C_{relax\_1}\,\widetilde{U^*}_N \leq \widetilde{\boldsymbol{\theta}}_N \leq \left(\theta_{max} - \theta_{ref\_N}\right) + V.C_{relax\_1}\,\widetilde{U^*}_N$$

Avec

[Math 36]

$$\widetilde{\boldsymbol{\theta}}_N = \begin{bmatrix} \theta_1 - \theta_{ref\_1} \\ \vdots \\ \theta_N - \theta_{ref\_N} \end{bmatrix}$$

$\theta_{min}$ et $\theta_{max}$ sont respectivement les extrema du cap acceptables à la fin de la trajectoire.

On pose :

$\theta_{ref\_N}$ : Le cap au dernier point dans la trajectoire de référence

V : Un paramètre de pondération.

Sur la base des développements théoriques ci-dessus, on détermine un vecteur de décision optimisé $\widetilde{U^*}_N$ exprimé dans l'équation [Math 32] en résolvant le problème d'optimisation posé dans l'équation [Math 37] suivante soumis aux contraintes définies par les équations [Math 21] à [Math 23], [Math 26] à [Math 30] et [Math 35]. On considère qu'un vecteur de décision est optimisé lorsque le coût associé J déterminé par application de l'équation [Math 31] atteint un minimum.

[Math 37]

$$\underset{\widetilde{U^*}_N}{\mathrm{argmin}}\,\frac{1}{2}\widetilde{U}_N^{\,T}\overline{H}\,\widetilde{U}_N + \overline{F}^T\,\widetilde{U}_N + \epsilon^2\rho = \widetilde{U^*}_N^{\,T}\left(\frac{1}{2}\overline{H} + C_{relax_1}^T\rho C_{relax_1}\right)\widetilde{U^*}_N + \overline{F}^T C_{relax_2}\,\widetilde{U^*}_N$$

A noter que la résolution du problème d'optimisation posé dans l'équation [Math 37] est effectivement intéressante et essentielle pour le contrôleur AES si le cap initial du véhicule est positif dans un évitement à gauche. S'il est négatif, la trajectoire de référence originale (sans recalcul) est déjà suffisante pour un évitement complet à gauche, au bon sens de braquage au volant. Pour un évitement à droite, les cas du cap initial négatif seront considérés. Ainsi, pour un évitement à droite, on considèrera les clothoïdes issues du raffinement uniquement dans le cas où le cap du véhicule est strictement négatif. Dans le cas d'évitement à droite avec cap initial nul ou positif le système est stable sans avoir besoin du raffinement de trajectoire. En outre, on peut utiliser la courbure initiale à la place de l'angle de volant initial en appliquant la relation entre l'angle du volant et la courbure décrite dans l'équation ([Math 24]).

La détermination de la cohérence du comportement du volant avec ce que le conducteur attend (Etapes 5 et 12 ci-dessous) peut être vérifiée, pour un évitement à gauche, en comptant le nombre d'extrema négatifs du profil d'angle, lorsque le cap initial est positif. Pour le cas d'évitement à droite, de manière similaire, on compte le nombre d'extrema positifs. S'il y a plus qu'un extrema négatif, on considère que le profil d'angle de volant n'est pas adapté au critère du conducteur. En effet, sous l'hypothèse que, lorsqu'il il y a plus d'un extrema négatif sur le profil d'angle du volant, le premier sert à faire approcher le véhicule à la trajectoire de référence même si le système est en cours de réaliser un évitement. Ce comportement du système ne peut pas être accepté par le conducteur. Dans ce cas, pour éliminer ce comportement inattendu, on augmente la valeur de décalage du déplacement longitudinal $\overline{x}$ en l'incrémentant de $\Delta\overline{x}$ jusqu'à ce qu'il ne reste qu'un seul extrema négatif sur le profil d'angle.

La valeur initiale de l'écart latéral de la trajectoire cherchée sera décalée d'une valeur de décalage latéral $y_{L\_ref\_init}$. Cette valeur de décalage est définie avant de résoudre le problème d'optimisation posé dans l'équation [Math 37]. La valeur de décalage latéral est calculée de telle sorte que la requête d'angle $\delta_{requete}$ du contrôleur robuste de l'AES à l'activation soit égal à l'angle du volant mesuré $\delta(t_0)$.

Donc :

[Math 38]

$$y_{L\_ref\_init} \approx D_{LookAhead} . sin\big(\theta(t_0)\big)$$

$$+ \frac{1}{K_{y_L}.Ratio\_DAE}\big(-\delta_{requete}(t_0) + K_\delta . \delta(t_0)$$

$$+ K_\theta . Ratio\_DAE . \theta(t_0)\big)$$

Où

$\delta_{requete}(t_0) = \delta(t_0)$ ;
$\theta(t_0)$ : le cap du volant mesurés à l'activation du système;
$\delta(t_0)$ : l'angle du volant mesuré à l'activation du système;
$K_{y_L}$ : le gain du contrôleur AES correspondant à l'écart latéral, du véhicule,
$K_\delta$ : le gain du contrôleur AES correspondant à l'angle du volant du véhicule,
$K_\theta$ : le gain du contrôleur AES correspondant au cap du véhicule, et
$D_{LookAhead}$ : la distance projetée dans le plan cartésien du véhicule.

La distance $D_{LookAhead}$ correspond au produit de la durée avant collision TTC et la vitesse du véhicule. Pour réduire la complexité d'implémentation, on suppose que l'angle du volant initial est très petit et peut être considéré comme être égal à 0 dans ce cas d'étude. Par conséquent, l'équation ([Math 38]) devient :

[Math 39]

$$y_{L\_ref\_init} = D_{LookAhead} . sin\big(\theta(t_0)\big) + \frac{1}{K_{y_L}} K_\theta . \theta(t_0)$$

En outre, pour assurer la trajectoire finale ne croise pas celle affinée, on ajoute une contrainte d'inégalité dans le problème d'optimisation posé dans l'équation [Math 37], qui n'autorise pas que l'écart latéral de la solution soit inférieur à celui de la trajectoire affinée.

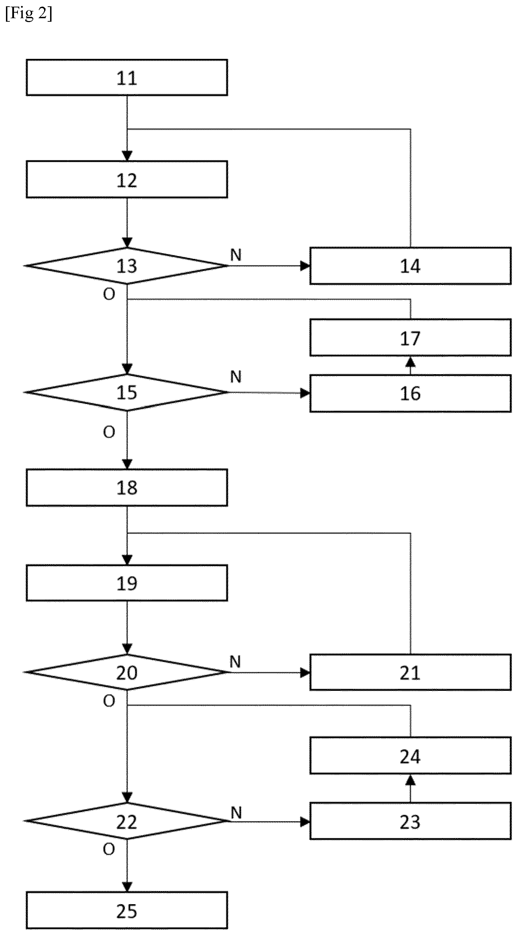

Les principales sous-étapes de l'étape de calcul 4 pour le raffinement d'une trajectoire d'évitement, illustrées par la figure 2, vont maintenant être décrites.

Lors d'une première sous-étape 11, on obtient une trajectoire de référence de l'étape de détermination 3 d'une trajectoire d'évitement d'une cible et des données de l'étape de fusion 2. On détermine alors des paramètres d'initialisation fonction de la trajectoire de référence (déplacement longitudinal de référence $x_{ref}$, déplacement latéral de référence $y_{ref}$, cap du véhicule de référence $\theta_{ref}$, courbure de la trajectoire du véhicule de référence $\kappa_{ref}$), et des données de la fusion (le cap initial du véhicule $\theta_{init}$ à l'activation t, et l'angle initial du volant $\delta_{init}$ à l'instant d'activation t) et on initialise des variables ITER, ITER2 et ITER3 à zéro.

Lors d'une deuxième sous-étape 12, on résout le problème d'optimisation du coût décrit par l'équation [Math 37] soumis aux contraintes définies par les équations [Math 21] à [Math 23], [Math 26] à [Math 30] et [Math 35] avec les paramètres d'initialisation déterminés.

Lors d'une troisième sous-étape 13, on détermine si le vecteur de décision optimisé $\widetilde{U^*}_N$ résout l'équation [Math 37] tout en étant associé à un minimum de la fonction de coût J [Math 31], si la contrainte sur le cap final $\tilde{\theta}_N$ définie par l'équation [Math 35] est satisfaite et si le produit de la variable ITER avec la valeur $\Delta t$ est inférieure à une valeur prédéfinie, notamment une durée avant impact TTC (acronyme anglophone pour « Time to collision ») reçue de l'étape de fusion 2.

Si tel n'est pas le cas, le procédé se poursuit par une quatrième sous-étape 14 au cours de laquelle on incrémente la variable ITER d'une unité, on prolonge la trajectoire de référence d'une durée égale à ITER fois $\Delta t$. Le procédé reprend alors à la deuxième sous-étape 12.

Si lors de la troisième sous-étape 13, on a déterminé qu'une solution optimale existe et que la contrainte sur le cap final est satisfaite, le procédé se poursuit par une cinquième sous-étape 15, au cours de laquelle on détermine si le comportement du volant est cohérent avec ce que le conducteur attend. Pour déterminer cela, on détermine le profil d'angle du volant $\delta_i$ depuis l'instant d'activation de l'AES puis en déterminant si le signe de l'angle du volant associé au premier extremum du profil d'angle du volant présente le même signe que le signe de l'angle du volant de la trajectoire de référence et s'il existe au plus un extremum de signe opposé au premier extremum sur la durée de la trajectoire optimisée.

Si le comportement du volant n'est pas cohérent avec ce que le conducteur attend, le procédé se poursuit par une sixième sous-étape 16 au cours de laquelle on incrémente la variable ITER2 d'une unité, et on augmente la valeur de décalage du déplacement longitudinal $\bar{x}$ de $\Delta \bar{x} = v \cdot \Delta \bar{t} \cdot ITER2$, puis par une septième sous-étape 17 au cours de laquelle on résout à nouveau le problème d'optimisation du coût décrit par l'équation [Math 37] soumis aux contraintes décrites par les équations ([Math 21] - [Math 23]), ([Math 26] - [Math 30]) et ([Math 35]) avec les paramètres d'initialisation déterminés à la sous-étape 13 et le déplacement longitudinal augmenté. Le procédé reprend alors à la cinquième sous-étape 15

Si le comportement du volant est cohérent avec ce que le conducteur attend lors de la cinquième sous-étape 15, le procédé se poursuit par une huitième sous-étape 18 au cours de laquelle on considère que la dernière trajectoire déterminée est la trajectoire affinée.

Si le procédé s'arrêtait ici, les trajectoires affinées trouvées ne seraient pas encore suffisantes pour éviter le problème de mauvais sens de braquage du volant lors de l'activation de l'AES. Pour surpasser ce problème, les étapes suivantes du procédé permettent d'assurer la rotation du volant dans la direction attendue et ce quelle que soit la vitesse

Le procédé se poursuit par une neuvième sous-étape 19, au cours de laquelle on résout à nouveau le problème d'optimisation du coût décrit par l'équation [Math 37] soumis aux contraintes décrites par les équations ([Math 21] - [Math 23], [Math 26] - [Math 30] et [Math 35]) avec un décalage $y_{L\_ref\_int}$ défini par l'équation [Math 39], en considérant la trajectoire affinée comme trajectoire de référence, et en réinitialisant la variable ITER2. En d'autres termes, on résout le problème d'optimisation du coût avec des paramètres d'initialisation définis en fonction de la trajectoire affinée.

Au cours d'une dixième sous-étape 20, on détermine si une solution optimale existe en déterminant si le vecteur de décision optimisé $\widetilde{U}^*_N$ résout l'équation [Math 37] tout en étant associé à un minimum de la fonction de coût J [Math 31] et si le déplacement latéral de la trajectoire de solution est supérieur au déplacement latéral de la trajectoire affinée. Il est à noter que le cap final n'est plus ici une contrainte de détermination d'une solution optimale car seule la partie initiale de la trajectoire affinée est modifiée, la trajectoire affinée satisfaisant déjà les contraintes sur le cap final.

Si tel n'est pas le cas, le procédé se poursuit par une onzième sous-étape 21 au cours de laquelle on incrémente la variable ITER3 d'une unité, et on réduit le cap initial $\theta_{init}$ de $\Delta\theta \cdot ITER3$. La valeur $\Delta\theta$ est prédéterminée, notamment en fonction de la sensibilité du capteur de cap et à travers une campagne d'essais. Le procédé reprend alors à la neuvième sous-étape 19.

Si on détermine à la sous-étape 20 qu'une solution optimale existe, le procédé se poursuit par une douzième sous-étape 22, au cours de laquelle on détermine si le comportement du conducteur est cohérent avec ce que le conducteur attend, de façon similaire à la détermination réalisée à la sous-étape 23.

Si le comportement du volant n'est pas cohérent avec ce que le conducteur attend, le procédé se poursuit par une treizième sous-étape 23 au cours de laquelle on incrémente la variable ITER2 d'une unité, on augmente la valeur de décalage du déplacement longitudinal $\bar{x}$ de $\Delta \bar{x} = v \cdot \Delta \bar{t} \cdot ITER2$. Le procédé se poursuit par une quatorzième sous-étape 24 au cours de laquelle on résout à nouveau le problème d'optimisation du coût décrit par l'équation [Math 37] soumis aux contraintes décrites par les équations ([Math 21] - [Math 23], [Math 26] - [Math 30] et [Math 35]) avec des paramètres d'initialisation comprenant le déplacement longitudinal augmenté. Le procédé reprend alors à la douzième sous-étape 22.

Si le comportement du volant est cohérent avec ce que le conducteur attend lors de la douzième sous-étape 22, le procédé se poursuit par une quinzième sous-étape 25 au cours de laquelle on considère que la dernière trajectoire déterminée est la trajectoire finale.

Il est à noter que la durée prédéterminée, l'écart angulaire, et le décalage longitudinal sont incrémentés successivement à concurrence de valeurs limites prédéterminées. Si tel est le cas, l'étape de raffinement s'interrompt et la trajectoire de référence est réalisée lors de l'étape de commande du véhicule.

Ce procédé de commande permet d'améliorer la stabilité du suivi de trajectoire ainsi que la prestation client, avec une rotation du volant dans le sens attendu. La durée de manœuvre est également réduite avec la méthode proposée.

## Revendications

1. Procédé de commande d'un véhicule automobile pour l'évitement d'une cible, le véhicule automobile étant muni d'au moins deux capteurs de perception, le procédé de commande comprenant les étapes suivantes :

   - une étape de détermination (1) des données des au moins deux capteurs,
   - une étape de fusion (2) des données des au moins deux capteurs de sorte à déterminer au moins l'angle du volant, la vitesse du véhicule et le cap du véhicule,
   - une étape de planification d'une trajectoire d'évitement de la cible (3) sous la forme d'une clothoïde comme trajectoire de référence,
   - une étape de raffinement de la trajectoire d'évitement de la cible (4) en fonction de l'angle du volant, de la vitesse du véhicule et du cap du véhicule et basée sur la résolution d'un problème d'optimisation,
   - une étape de commande du véhicule de sorte à réaliser la trajectoire raffinée,

**EP 4 264 390 B1**

l'étape de raffinement de la trajectoire comprenant une première série de sous-étapes pour affiner la trajectoire d'évitement en fonction de la longueur de la trajectoire, du sens de rotation du volant et du cap final et une deuxième série de sous-étapes pour raffiner la trajectoire affinée en fonction du cap initial et du sens de rotation du volant, la première série de sous-étapes comprenant les sous-étapes suivantes :

on détermine des paramètres d'initialisation du problème d'optimisation en fonction de la trajectoire de référence et des données de la fusion, les paramètres d'initialisation comprenant un déplacement longitudinal de référence, un déplacement latéral de référence, un cap du véhicule de référence, une courbure de la trajectoire du véhicule de référence, un cap initial du véhicule, et un angle initial du volant,
on résout le problème d'optimisation et on détermine si une solution optimale existe en déterminant si la solution du problème d'optimisation correspond à un minimum d'une fonction de coût prédéfinie et si la solution du problème d'optimisation satisfait une contrainte sur le cap final du véhicule,
si tel est le cas, on détermine le profil d'angle du volant depuis l'instant d'activation du procédé de commande puis on détermine si le signe de l'angle du volant associé au premier extremum du profil d'angle du volant présente le même signe que le signe de l'angle du volant de la trajectoire de référence et s'il existe au plus un extremum de signe opposé au premier extremum sur la durée de la trajectoire optimisée, si tel est le cas, la solution du problème d'optimisation est considérée comme une trajectoire affinée..

2. Procédé de commande selon la revendication 1, dans lequel le problème d'optimisation est fonction d'un déplacement longitudinal de référence, d'un déplacement latéral de référence, d'un cap du véhicule de référence, d'une courbure de la trajectoire du véhicule de référence et d'un vecteur de décision comprenant la vitesse de variation de la courbure de la trajectoire et la distance parcourue par rapport à l'origine et de paramètres de réglages déterminés empiriquement, et de contraintes sur le déplacement longitudinal initial, sur le déplacement latéral initial, sur le déplacement latéral final, sur l'angle du volant, sur la vitesse de rotation du volant et sur la valeur du cap final.

3. Procédé de commande selon la revendication 1, dans lequel, si on détermine qu'une solution optimale n'existe pas, on prolonge la trajectoire d'une durée prédéterminée, puis on reprend le procédé à la résolution du problème d'optimisation en tenant compte de la prolongation de trajectoire, la durée prédéterminée étant augmentée à chaque occurrence successive de détermination qu'une solution optimale n'existe pas.

4. Procédé de commande selon l'une quelconque des revendications 1 à 3, dans lequel si le profil d'angle du volant n'est pas satisfaisant, on applique un décalage longitudinal à la trajectoire de référence, et on résout de nouveau le problème d'optimisation, puis on reprend le procédé à la détermination du profil d'angle du volant, le décalage longitudinal étant augmenté à chaque occurrence successive de détermination que le profil d'angle du volant n'est pas satisfaisant.

5. Procédé de commande selon l'une quelconque des revendications 1 à 4, dans lequel une contrainte du problème d'optimisation est que le déplacement longitudinal des points de la trajectoire affinée doit être égal au déplacement longitudinal des points dans la trajectoire de référence.

6. Procédé de commande selon l'une quelconque des revendications 1 à 5, dans lequel une contrainte du problème d'optimisation est que la valeur finale du cap du véhicule de la trajectoire affinée doit être comprise dans un intervalle restreint de valeurs.

7. Procédé de commande selon l'une quelconque des revendications 1 à 6, dans lequel une contrainte du problème d'optimisation est que le déplacement latéral des points de la trajectoire affinée doit être inférieur au déplacement latéral de la ligne extrême à ne pas dépasser lors d'une correction.

8. Procédé de commande selon l'une quelconque des revendications à 7, dans lequel la deuxième série de sous-étapes comprend les sous-étapes suivantes :

on détermine de nouveaux paramètres d'initialisation fonction de la trajectoire affinée et des données de fusion,
on applique un décalage latéral prédéterminé à la trajectoire affinée et on résout le problème d'optimisation,
on détermine si une solution optimale existe en déterminant si elle correspond à un minimum d'une fonction de coût prédéfinie,
si tel est le cas, on détermine le profil d'angle du volant depuis l'instant du procédé de commande et on détermine si le signe de l'angle du volant associé au premier extremum du profil d'angle du volant présente le même signe que le signe de l'angle du volant de la trajectoire de référence et s'il existe au plus un extremum de signe opposé au premier extremum sur la durée de la trajectoire optimisée, si tel est le cas, la solution du problème d'optimisation est considérée comme une trajectoire raffinée finale.

9. Procédé de commande selon la revendication 8, dans lequel, si on détermine qu'une solution optimale n'existe pas, on réduit le cap initial d'un écart angulaire prédéterminé puis on reprend le procédé à la résolution du problème d'optimisation, l'écart angulaire étant augmenté à chaque occurrence successive de qu'une solution optimale n'existe pas.

10. Procédé de commande selon l'une quelconque des revendications 8 ou 9, dans lequel si on détermine que la solution optimale ne satisfait pas aux contraintes d'angle du volant, on applique un décalage longitudinal à la trajectoire affinée, on résout le problème d'optimisation, puis on reprend le procédé à la détermination du profil d'angle du volant, le décalage longitudinal étant augmenté à chaque occurrence successive de détermination que le profil d'angle du volant n'est pas satisfaisant.

11. Procédé de commande selon l'une quelconque des revendications précédentes, dans lequel la durée prédéterminée, l'écart angulaire, et le décalage longitudinal sont incrémentés successivement à concurrence de valeurs limites prédéterminées, si tel est le cas, l'étape de raffinement s'interrompt et la trajectoire de référence est réalisée lors de l'étape de commande du véhicule.

12. Système de commande d'un véhicule automobile pour l'évitement d'une cible,
le véhicule automobile étant muni d'au moins un capteur de perception, et d'au moins un moyen de calcul configuré pour réaliser le procédé de commande tel que revendiqué dans les revendications précédentes.

**Patentansprüche**

1. Verfahren zur Steuerung eines Kraftfahrzeugs zum Ausweichen eines Zielobjekts, wobei das Kraftfahrzeug über mindestens zwei Wahrnehmungssensoren verfügt, wobei das Steuerungsverfahren die folgenden Schritte beinhaltet:

   - einen Schritt des Bestimmens (1) der Daten der mindestens zwei Sensoren,
   - einen Schritt des Zusammenführens (2) der Daten der mindestens zwei Sensoren, um mindestens den Winkel des Lenkrads, die Geschwindigkeit des Fahrzeugs und den Kurs des Fahrzeugs zu bestimmen,
   - einen Schritt des Planens einer Bahn zum Ausweichen des Zielobjekts (3) in Form einer Klothoide als Referenzbahn,
   - einen Schritt des Verfeinerns der Bahn zum Ausweichen des Zielobjekts (4) in Abhängigkeit von dem Winkel des Lenkrads, der Geschwindigkeit des Fahrzeugs und dem Kurs des Fahrzeugs und basierend auf der Lösung eines Optimierungsproblems,
   - einen Schritt des Steuerns des Fahrzeugs, um die verfeinerte Bahn umzusetzen,

   wobei der Schritt des Verfeinerns der Bahn eine erste Folge von Teilschritten, um die Bahn zum Ausweichen in Abhängigkeit von der Länge der Bahn, der Drehrichtung des Lenkrads und dem endgültigen Kurs vorzuverfeinern, und eine zweite Folge von Teilschritten, um die vorverfeinerte Bahn in Abhängigkeit von dem anfänglichen Kurs und der Drehrichtung des Lenkrads zu verfeinern, beinhaltet, wobei die erste Folge von Teilschritten die folgenden Teilschritte beinhaltet:

   Bestimmen von Initialisierungsparametern des Optimierungsproblems in Abhängigkeit von der Referenzbahn und den Daten der Zusammenführung, wobei die Initialisierungsparameter eine Referenzlängsbewegung, eine Referenzquerbewegung, einen Referenzkurs des Fahrzeugs, eine Referenzkrümmung der Bahn des Fahrzeugs, einen Anfangskurs des Fahrzeugs und einen Anfangswinkel des Lenkrads beinhalten,
   Lösen des Optimierungsproblems und Bestimmen, ob eine optimale Lösung existiert, indem bestimmt wird, ob die Lösung des Optimierungsproblems einem Minimum einer vordefinierten Kostenfunktion entspricht und ob die Lösung des Optimierungsproblems eine Beschränkung hinsichtlich des endgültigen Kurses des Fahrzeugs erfüllt,
   wenn dies der Fall ist, Bestimmen des Winkelprofils des Lenkrads seit dem Aktivierungszeitpunkt des Steuerungsverfahrens und dann Bestimmen, ob das Vorzeichen des Winkels des Lenkrads, das mit dem ersten Extremum des Winkelprofils des Lenkrads assoziiert ist, dasselbe Vorzeichen ist wie das Vorzeichen des Winkels des Lenkrads der Referenzbahn und ob höchstens ein Extremum mit zu dem ersten Extremum umgekehrtem Vorzeichen über den Zeitraum der optimierten Bahn existiert, und wenn dies der Fall ist, Betrachten der Lösung des Optimierungsproblems als eine vorverfeinerte Bahn.

2. Steuerungsverfahren nach Anspruch 1, wobei das Optimierungsproblem von einer Referenzlängsbewegung, von einer Referenzquerbewegung, von einem Referenzkurs des Fahrzeugs, von einer Referenzkrümmung der Bahn des Fahrzeugs und von einem Entscheidungsvektor, der die Änderungsgeschwindigkeit der Krümmung der Bahn und die zurückgelegte Entfernung in Bezug auf den Ursprung beinhaltet, und von empirisch bestimmten Einstellparametern und von Beschränkungen hinsichtlich der anfänglichen Längsbewegung, der anfänglichen Querbewegung, der endgültigen Querbewegung, des Winkels des Lenkrads, der Drehgeschwindigkeit des Lenkrads und des Werts des endgültigen Kurses abhängt.

3. Steuerungsverfahren nach Anspruch 1, wobei, wenn bestimmt wird, dass eine optimale Lösung nicht existiert, die Bahn um einen vorbestimmten Zeitraum verlängert wird und dann das Verfahren bei der Lösung des Optimierungsproblems unter Berücksichtigung der Bahnverlängerung wiederaufgenommen wird, wobei der vorbestimmte Zeitraum mit jedem sukzessiven Auftreten des Bestimmens, dass eine optimale Lösung nicht existiert, vergrößert wird.

4. Steuerungsverfahren nach einem der Ansprüche 1 bis 3, wobei, wenn das Winkelprofil des Lenkrads nicht zufriedenstellend ist, eine Längsverschiebung auf die Referenzbahn angewendet wird und das Optimierungsproblem erneut gelöst wird und dann das Verfahren bei der Bestimmung des Winkelprofils des Lenkrads wiederaufgenommen wird, wobei die Längsverschiebung mit jedem sukzessiven Auftreten des Bestimmens, dass das Winkelprofil des Lenkrads nicht zufriedenstellend ist, vergrößert wird.

5. Steuerungsverfahren nach einem der Ansprüche 1 bis 4, wobei eine Beschränkung des Optimierungsproblems darin besteht, dass die Längsbewegung der Punkte der vorverfeinerten Bahn gleich der Längsbewegung der Punkte in der Referenzbahn sein muss.

6. Steuerungsverfahren nach einem der Ansprüche 1 bis 5, wobei eine Beschränkung des Optimierungsproblems darin besteht, dass der endgültige Wert des Kurses des Fahrzeugs der vorverfeinerten Bahn in einem beschränkten Werteintervall enthalten sein muss.

7. Steuerungsverfahren nach einem der Ansprüche 1 bis 6, wobei eine Beschränkung des Optimierungsproblems darin besteht, dass die Querbewegung der Punkte der vorverfeinerten Bahn kleiner sein muss als die Querbewegung der äußersten Linie, die bei einer Korrektur nicht überschritten werden darf.

8. Steuerungsverfahren nach einem der Ansprüche bis 7, wobei die zweite Folge von Teilschritten die folgenden Teilschritte beinhaltet:

Bestimmen neuer Initialisierungsparameter in Abhängigkeit von der vorverfeinerten Bahn und den Daten der Zusammenführung, Anwenden einer vorbestimmten Querverschiebung auf die vorverfeinerte Bahn und Lösen des Optimierungsproblems,
Bestimmen, ob eine optimale Lösung existiert, indem bestimmt wird, ob sie einem Minimum einer vordefinierten Kostenfunktion entspricht,
wenn dies der Fall ist, Bestimmen des Winkelprofils des Lenkrads seit dem Zeitpunkt des Steuerungsverfahrens und Bestimmen, ob das Vorzeichen des Winkels des Lenkrads, das mit dem ersten Extremum des Winkelprofils des Lenkrads assoziiert ist, dasselbe Vorzeichen ist wie das Vorzeichen des Winkels des Lenkrads der Referenzbahn und ob höchstens ein Extremum mit zu dem ersten Extremum umgekehrtem Vorzeichen über den Zeitraum der optimierten Bahn existiert, und wenn dies der Fall ist, Betrachten der Lösung des Optimierungsproblems als eine endgültige verfeinerte Bahn.

9. Steuerungsverfahren nach Anspruch 8, wobei, wenn bestimmt wird, dass eine optimale Lösung nicht existiert, der anfängliche Kurs um eine vorbestimmte Winkelabweichung reduziert wird und dann das Verfahren bei der Lösung des Optimierungsproblems wiederaufgenommen wird, wobei die Winkelabweichung mit jedem sukzessiven Auftreten von, dass eine optimale Lösung nicht existiert, vergrößert wird.

10. Steuerungsverfahren nach einem der Ansprüche 8 oder 9, wobei, wenn bestimmt wird, dass die optimale Lösung die Winkelbeschränkungen des Lenkrads nicht erfüllt, eine Längsverschiebung auf die vorverfeinerte Bahn angewendet wird, das Optimierungsproblem gelöst wird und dann das Verfahren bei der Bestimmung des Winkelprofils des Lenkrads wiederaufgenommen wird, wobei die Längsverschiebung mit jedem sukzessiven Auftreten des Bestimmens, dass das Winkelprofil des Lenkrads nicht zufriedenstellend ist, vergrößert wird.

11. Steuerungsverfahren nach einem der vorhergehenden Ansprüche, wobei der vorbestimmte Zeitraum, die Winkelabweichung und die Längsverschiebung sukzessiv bis zu vorbestimmten Grenzwerten inkrementiert werden und, wenn dies der Fall ist, der Schritt des Verfeinerns unterbrochen wird und beim Schritt des Steuerns des Fahrzeugs die Referenzbahn umgesetzt wird.

12. System zur Steuerung eines Kraftfahrzeugs zum Ausweichen eines Zielobjekts,
wobei das Kraftfahrzeug über mindestens einen Wahrnehmungssensor und über mindestens ein Rechenmittel verfügt, das dazu konfiguriert ist, das Steuerungsverfahren nach den vorhergehenden Ansprüche umzusetzen.

**Claims**

1. Method for controlling a motor vehicle for the avoidance of a target, the motor vehicle being provided with at least two perception sensors, the control method comprising the following steps:

   - a step of determination (1) of the data from the at least two sensors,
   - a step of merging (2) of the data from the at least two sensors so as to determine at least the steering wheel angle, the speed of the vehicle and the heading of the vehicle,
   - a step of planning (3) of a target avoidance path in the form of a clothoid as reference path,
   - a step of refinement (4) of the target avoidance path as a function of the steering wheel angle, the speed of the vehicle and the heading of the vehicle and based on the solving of an optimization problem,
   - a step of control of the vehicle so as to implement the refined path,

   the path refinement step comprising a first series of substeps to improve the avoidance path as a function of the length of the path, of the direction of rotation of the steering wheel and of the final heading and a second series of substeps to refine the improved path as a function of the initial heading and of the direction of rotation of the steering wheel, the first series of substeps comprising the following substeps:

   initialization parameters of the optimization problem are determined as a function of the reference path and of the data from the merge, the initialization parameters comprising a reference longitudinal displacement, a reference lateral displacement, a reference vehicle heading, a reference vehicle path curvature, an initial heading of the vehicle, and an initial steering wheel angle,
   the optimization problem is solved and a determination is made as to whether an optimal solution exists by determining if the solution of the optimization problem corresponds to a minimum of a predefined cost function and if the solution of the optimization problem satisfies a constraint on the final heading of the vehicle,
   if such is the case, the steering wheel angle profile is determined from the instant of activation of the control method, then a determination is made as to whether the sign of the steering wheel angle associated with the first extremum of the steering wheel angle profile has the same sign as the sign of the steering wheel angle of the reference path and if there is at most an extremum of a sign opposite the first extremum over the duration of the optimized path; if such is the case, the solution of the optimization problem is considered as an improved path.

2. Control method according to Claim 1, wherein the optimization problem is a function of a reference longitudinal displacement, of a reference lateral displacement, of a reference vehicle heading, of a curvature of the path of the reference vehicle and of a decision vector comprising the speed of variation of the curvature of the path and the distance travelled with respect to the origin and of empirically determined setting parameters, and of constraints on the initial longitudinal displacement, on the initial lateral displacement, on the final lateral displacement, on the steering wheel angle, on the speed of rotation of the steering wheel and on the final heading value.

3. Control method according to Claim 1, wherein, if it is determined that an optimal solution does not exist, the path is extended by a predetermined duration, then the method is resumed at the solving of the optimization problem by taking account of the path extension, the predetermined duration being increased on each successive occurrence of determination that an optimal solution does not exist.

4. Control method according to any one of Claims 1 to 3, wherein, if the steering wheel angle profile is not satisfactory, a longitudinal offset is applied to the reference path, and the optimization problem is solved again, then the method is resumed at the determination of the steering wheel angle profile, the longitudinal offset being increased on each successive occurrence of determination that the steering wheel angle profile is not satisfactory.

5. Control method according to any one of Claims 1 to 4, wherein a constraint of the optimization problem is that the longitudinal displacement of the points of the improved path must be equal to the longitudinal displacement of the points in the reference path.

6. Control method according to any one of Claims 1 to 5, wherein a constraint of the optimization problem is that the final value of the heading of the vehicle of the improved path must lie within a restricted range of values.

7. Control method according to any one of Claims 1 to 6, wherein a constraint of the optimization problem is that the lateral displacement of the points of the improved path must be less than the lateral displacement of the extreme line not to be exceeded upon a correction.

8. Control method according to any one of Claims to 7, wherein the second series of substeps comprises the following substeps:

new initialization parameters are determined as a function of the improved path and of the merging data, a predetermined lateral offset is applied to the improved path and the optimization problem is solved,
a determination is made as to whether an optimal solution exists by determining if it corresponds to a minimum of a predefined cost function,
if such is the case, the steering wheel angle profile is determined from the instant of the control method and a determination is made as to whether the sign of the steering wheel angle associated with the first extremum of the steering wheel angle profile has the same sign as the sign of the steering wheel angle of the reference path and if there is at most an extremum of a sign opposite the first extremum over the duration of the optimized path; if such is the case, the solution of the optimization problem is considered as a final refined path.

9. Control method according to Claim 8, wherein, if it is determined that an optimal solution does not exist, the initial heading is reduced by a predetermined angular deviation then the method is resumed at the solving of the optimization problem, the angular deviation being increased on each successive occurrence of that an optimal solution does not exist.

10. Control method according to either one of Claims 8 and 9, wherein, if it is determined that the optimal solution does not satisfy the steering wheel angle constraints, a longitudinal offset is applied to the improved path, the optimization problem is solved, then the method is resumed at the determination of the steering wheel angle profile, the longitudinal offset being increased on each successive occurrence of determination that the steering wheel angle profile is not satisfactory.

11. Control method according to any one of the preceding claims, wherein the predetermined duration, the angular deviation and the longitudinal offset are incremented successively up to predetermined limit values; if such is the case, the refinement step is interrupted and the reference path is implemented in the vehicle control step.

12. System for controlling a motor vehicle for the avoidance of a target,
the motor vehicle being provided with at least one perception sensor, and at least one computation means configured to perform the control method as claimed in the preceding claims.

[Fig 1]

[Fig 2]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2003457

- US 20080255728 A

**Littérature non-brevet citée dans la description**

- **P. LIMA** ; **J.MARTENSSON** ; **M. TRINCAVELLI**. Clothoid-based model predictive control for autonomous driving. *ECC*, 2015
- **WILKO SCHWARTING** ; **JAVIER ALONSO-MORA** ; **LIAM PAULI** ; **SERTAC KARAMAN** ; **DANIELA RUS**. Parallel autonomy in automated vehicles: Safe motion generation with minimal intervention. *ICRA*, 2017

- **ERIC C. KERRIGAN** ; **JAN M. MACIEJOWSKI**. Soft constraints and exact penalty functions in model predictive control. *UKACC*, 2000